# FASCICULE DE BREVET EUROPEEN

(11) **EP 0 755 720 B1**
(45) Date de publication et mention de la délivrance du brevet: **27.02.2002**
(21) Numéro de dépôt: 96401665.3
(22) Date de dépôt: 25.07.1996
(51) Int. Cl.: B05B 7/04, B05B 7/06, F23D 11/10

(54) **Dispositif de pulvérisation d'un produit liquide**
Vorrichtung zur Zerstäubung einer Flüssigkeit
Device for spraying a liquid

(30) Priorité: 28.07.1995 FR 9509199
(43) Date de publication de la demande: 29.01.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Bodelin, Pierre, 92170 Vanves (FR); Laurenceau, Serge, 78000 Versailles (FR); Recourt, Patrick, 91460 Marcoussis (FR); Ougarane, Lahcen, 78180 Montigny le Bretonneux (FR)
(74) Mandataire: Vesin, Jacques

(56) Documents cités:
- EP-A- 0 105 493
- EP-A- 0 593 171
- GB-A- 672 441

## Description

La présente invention concerne un dispositif de pulvérisation d'un produit liquide, notamment d'un combustible liquide, dans un espace de travail. Elle s'applique en particulier aux brûleurs pour fours de fusion de verre.

Les pressions dont il est question ci-dessous sont des pressions relatives.

L'invention concerne le domaine de la pulvérisation d'un produit liquide dans un espace de travail du type dans lequel on réalise une pré-pulvérisation du produit liquide à l'intérieur d'un espace de pré-pulvérisation différent de l'espace de travail et on réalise une pulvérisation du mélange pré-pulvérisé par mise en oeuvre d'un flux gazeux de pulvérisation.

L'invention est relative à un dispositif de pulvérisation d'un produit liquide, notamment d'un combustible liquide, dans un espace de travail extérieur audit dispositif, comportant des moyens de prépulvérisation du produit liquide lesdits moyens de pré-pulvérisation comportant une chambre de confinement pourvue d' une sortie d'éjection du mélange pré-pulvérisé débouchant directement dans l'espace de travail, des moyens d'alimentation desdits moyens de pré-pulvérisation en produit liquide à pulvériser et des moyens de pulvérisation du mélange pré-pulvérisé, lesdits moyens de pulvérisation comprenant des moyens d'éjection d'un flux gazeux de pulvérisation dans le mélange pré-pulvérisé à l'intérieur de l'espace de travail, en sortie des moyens de pré-pulvérisation.

On connaît des procédés et des dispositifs permettant de pulvériser ou atomiser un combustible liquide, notamment du fuel lourd, en fines gouttelettes. Ces dernières, mises en présence d'un comburant, de l'oxygène par exemple, permettent d'entretenir une flamme.

Les caractéristiques de la flamme obtenue en sortie du dispositif de pulvérisation dépendent de la qualité de pulvérisation du liquide, en particulier de la taille des gouttelettes obtenues et de la répartition statistique des diamètres de celle-ci. par ailleurs, la nature de la flamme obtenue dépend également de la vitesse d'éjection du fluide pulvérisé à la sortie du dispositif de pulvérisation.

En fonction des caractéristiques de la pulvérisation, les flammes obtenues peuvent être molles ou dures, et accrochées à l'extrémité du dispositif de pulvérisation ou encore décrochées.

Par ailleurs, dans l'application aux fours de fusion de verre, un dispositif de pulvérisation d'un combustible liquide doit être adapté pour résister aux hautes températures de l'ordre de 1400 à 1700°C régnant dans le four. En particulier, un tel dispositif doit être capable de supporter ces températures pendant un certain temps alors qu'il n'est pas en fonctionnement.

Les procédés et dispositifs de pulvérisation connus en satisfont les conditions décrites précédemment que de manière imparfaite ou partielle.

Par exemple, on connaît un dispositif de pulvérisation à double atomisation comportant une première chambre de pré-pulvérisation, dans laquelle sont introduits un fluide de pré-pulvérisation et un combustible liquide. La sortie de cette chambre de pré-pulvérisation débouche dans une seconde chambre de pulvérisation comportant des ouvertures d'arrivée d'un flux gazeux de pulvérisation. La sortie de cette seconde chambre de pulvérisation débouche dans l'espace de travail dans lequel le combustible pulvérisé est enflammé. un tel dispositif présente un risque d'explosion dû à la présence de combustible pulvérisé dans les deux chambres de pulvérisation interne consécutives, et dont la dernière est en communication avec l'espace de travail où est établie la flamme. Par ailleurs, ce dispositif est très mal protégé des agressions thermiques.

Il est connu de EP-A-0 593 171 ainsi que de GB-A-672 441 un procédé de pulvérisation d'un combustible liquide dans lequel on pré-pulvérise ledit combustible liquide dans un espace de pré-pulvérisation, le mélange pré-pulvérisé étant pulvérisé à l'aide d'un flux gazeux de pulvérisation.

La présente invention a pour but de proposer un dispositif de pulvérisation d'un produit liquide, notamment d'un combustible liquide permettant pour un débit donné de combustible d'autoriser le réglage des caractéristiques de la flamme et en particulier d'obtenir une flamme accrochée, longue et molle, tout en résistant aux températures élevées régnant dans un four.

Le dispositif selon l'invention est caractérisé en ce que les moyens de pré-pulvérisation et les moyens d'éjection du flux gazeux de pulvérisation présentent respectivement un tronçon cylindrique d'extrémité dont les extrémités de sorties débouchent dans l'espace de travail et sont disposées sensiblement dans un même plan sensiblement perpendiculaire à la direction (X-X) d'écoulement du flux du mélange pulvérisé, le diamètre D2 du tronçon d'extrémité des moyens de pré-pulvérisation étant dimensionne afin que la pression à l'intérieur de la chambre de confinement soit supérieure de 1 à 5 bars à la pression régnant dans l'espace de travail.

Dans le dispositif selon l'invention, on retrouve selon certaines variantes les caractéristiques suivantes:
- la pré-pulvérisation du liquide est obtenue par mise en oeuvre d'un flux gazeux de pré-pulvérisation;
- la pré-pulvérisation du liquide est réalisée dans une chambre de confinement, munie d'une sortie d'éjection du mélange pré-pulvérisé débouchant dans ledit espace de travail et dans laquelle sont introduits centralement le flux gazeux de pré-pulvérisation et annulairement le produit liquide;
- la pulvérisation du mélange pré-pulvérisé est réalisée immédiatement en sortie de ladite chambre de confinement;
- la pression régnant à l'intérieur de la chambre de confinement est de 1 à 5 bars supérieure à la pression régnant dans l'espace de travail;
- le rapport du débit du flux gazeux de pré-pulvérisation au débit du flux gazeux de pulvérisation est compris entre 1 et 5;
- Les compositions gazeuses des flux de pré-pulvérisation et de pulvérisation sont identiques; et
- la vitesse du flux gazeux de pulvérisation introduit dans l'espace de travail est comprise entre 5 m/s et 120 m/s.

Dans le dispositif selon l'invention, on retrouve les caractéristiques suivantes, selon certaines variantes:
- Les moyens d'éjection du flux de pulvérisation débouchent radialement à l'extérieur de ladite sortie d'éjection;
- La sortie des moyens d'éjection du flux de pulvérisation est répartie annulairement autour de ladite sortie d'éjection;
- Les moyens d'éjection du flux de pulvérisation comportent un tube d'alimentation en flux gazeux de pulvérisation débouchant dans l'espace de travail et dans lequel sont reçus les moyens de pré-pulvérisation;
- Les sorties des moyens de pré-pulvérisation et des moyens d'éjection du flux de pulvérisation sont disposées sensiblement dans un même plan sensiblement perpendiculaire à la direction d'écoulement du flux du mélange pulvérisé;
- Les moyens de pré-pulvérisation comportent une buse d'éjection d'un flux gazeux de pré-pulvérisation et des moyens d'établissement dudit flux gazeux de pré-pulvérisation;
- Les moyens d'alimentation en produit liquide comportent un tube débouchant, à l'intérieur duquel est disposée ladite buse d'éjection du flux gazeux de pré-pul vérisation, laquelle buse a son extrémité d'éjection disposée en retrait de l'extrémité du tube qui forme la sortie d'éjection des moyens de prépulvérisation ;
- le tube d'alimentation en produit liquide est de diamètre décroissant vers ladite sortie d'éjection, délimitant ainsi une chambre de confinement dans laquelle est réalisée la prépulvérisation ;
- le diamètre de sortie de ladite buse est compris entre le quart et le quadruple du diamètre de sortie desdits moyens de prépulvérisation ;
- ladite buse comporte une extrémité de sortie de diamètre réduit s'opposant au remplissage en retour de celle-ci, en cas d'interruption de l'alimentation en fluide de prépulvérisation ; et
- il comporte des moyens de réglage des débits des flux gazeux de prépulvérisation et de pulvérisation.

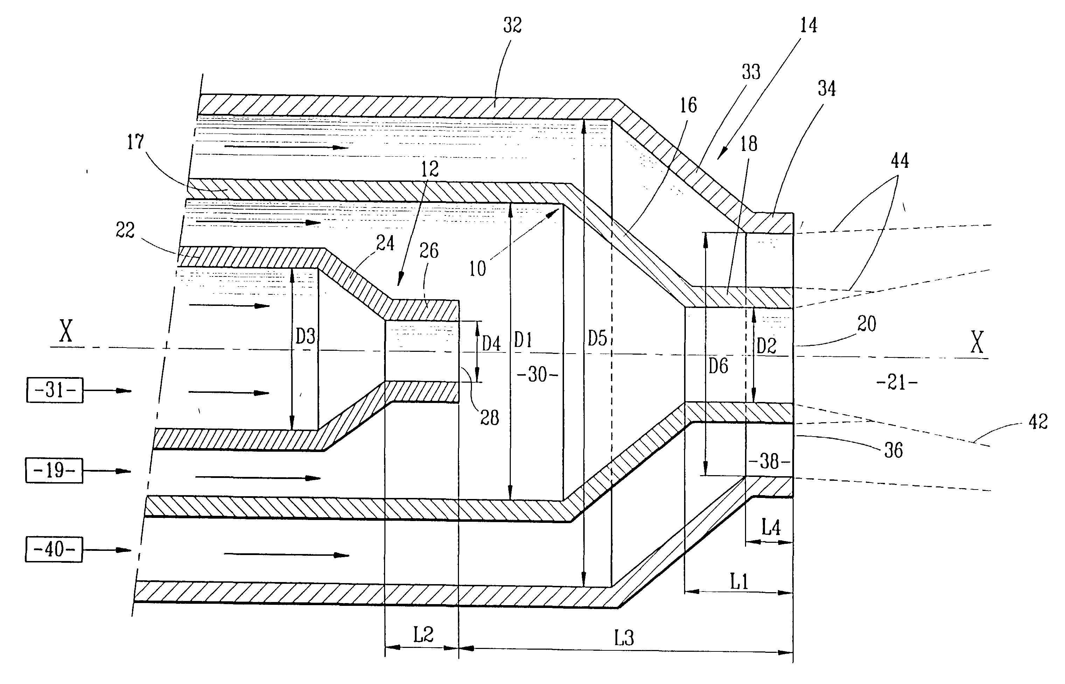

L'invention sera mieux comprise à la lecture de la description qui va suivre, donnée uniquement à titre d'exemple, et faite en se référant à la figure unique qui est une vue schématique partielle en coupe longitudinale d'un dispositif de pulvérisation selon l'invention.

Le dispositif de pulvérisation de fuel représenté sur la figure unique est généralement de révolution d'axe X-X. Il est adapté pour produire en sortie un mélange pulvérisé ayant des gouttelettes d'un diamètre moyen d'environ 100 µm réparties suivant une gamme étendue de diamètres autour de cette valeur moyenne. Il est adapté pour être associé à des moyens d'alimentation complémentaire en comburant, de l'oxygène par exemple. Ces moyens forment, par exemple, une veine annulaire autour du dispositif de pulvérisation. Ils comportent alors un conduit de section circulaire ménagé directement dans une brique de four, typiquement de four de fusion de verre, à l'intérieur duquel est disposé axialement le dispositif de pulvérisation. Ces moyens d'alimentation en comburant peuvent également être formés par une lance à oxygène disposée à côté du dispositif de pulvérisation.

Le dispositif représenté comporte essentiellement un tube 10 d'alimentation en combustible liquide, ici du fuel, à l'intérieur duquel est disposée co-axialement une buse 12 d'éjection d'un flux gazeux de prépulvérisation, ainsi qu'un tube extérieur 14, disposé co-axialement autour du tube 10 et adapté pour l'éjection à son extrémité ouverte d'un flux gazeux de pulvérisation. Les gaz de pulvérisation et prépulvérisation sont par exemple de l'air ou de la vapeur d'eau et peuvent provenir d'une même source s'ils sont identiques.

Le tube 10 d'alimentation en combustible liquide est formé en laiton et a une épaisseur comprise entre 1 et 6 mm. Il présente vers son extrémité un tronçon de diamètre progressivement décroissant 16 suivant le sens d'écoulement du combustible liquide, depuis un tronçon principal 17 de diamètre nominal D1 jusqu'à un tronçon cylindrique d'extrémité 18 de diamètre réduit D2. Ce tronçon d'extrémité a un diamètre égal à 2 mm et une longueur notée L1 supérieure à 10 mm.

L'extrémité amont du tube 10 est reliée à des moyens 19 d'alimentation en combustible liquide, une pompe par exemple, dont la pression de sortie est supérieure à 1,5 bar.

L'extrémité libre 20 du tube 10 débouche directement à l'intérieur d'un espace de travail 21 extérieur audit dispositif de pulvérisation et dans lequel s'établit la flamme, l'espace interne du four dans l'exemple considéré.

La buse 12 est en laiton et comporte un tronçon principal cylindrique 22 d'axe X-X et de grand diamètre D3, prolongé vers la sortie de la buse par un tronçon de diamètre progressivement décroissant 24 suivant le sens d'écoulement du gaz de prépulvérisation. Le tronçon 24 est lui-même prolongé par un tronçon cylindrique d'extrémité 26 de diamètre D4 inférieur à D3 et de longueur L2 par exemple égale à 2 mm.

La buse 12 est disposée à l'intérieur du tube 10 suivant l'axe X-X, et l'extrémité débouchante 28 de celle-ci est dirigée vers la sortie 20 du tube 10. Cette extrémité 28 est disposée en retrait de l'extrémité 20, et est séparée de celle-ci d'une distance notée L3.

Une chambre de confinement 30 est ainsi délimitée à l'intérieur du tube 10 entre les sorties d'extrémité 28 et 20 respectivement de la buse 12 et du tube 10. Elle définit un espace de prépulvérisation du combustible liquide.

La distance L3 est par exemple égale à 70 mm. Elle doit être suffisamment grande pour assurer une prépulvérisation efficace du combustible liquide par le flux gazeux issu de la buse 12, mais elle doit cependant rester inférieure à 200 mm pour éviter tout phénomène de coalescence des gouttes au sein du mélange.

Le tronçon principal 22 est relié en amont à des moyens 31 d'établissement d'un flux gazeux de prépulvérisation, un compresseur par exemple, qui comprennent des moyens de tout type connu de réglage du débit de ce flux gazeux.

Le tube extérieur 14 d'acheminement du flux gazeux de pulvérisation est réalisé par exemple en acier inoxydable et est disposé axialement autour du tube 10. Il comporte un tronçon principal 32 cylindrique de diamètre D5 relié par un tronçon 33 de diamètre progressivement décroissant suivant le sens de l'écoulement du flux gazeux à un tronçon cylindrique d'extrémité 34 de diamètre D6 et de longueur L4. Le tronçon 34 entourant le tronçon 18 délimite avec celui-ci un conduit 38 annulaire de sortie pour le flux gazeux de pulvérisation. L'extrémité 36 du tronçon d'extrémité débouche directement dans l'espace de travail et est disposée rigoureusement dans un même plan, s'étendant sensiblement perpendiculairement à la direction d'éjection du dispositif de pulvérisation, que l'extrémité de sortie 20 de la chambre de confinement 30.

L'extrémité amont du tronçon principal 32 est reliée à des moyens 40 d'établissement du flux gazeux de pulvérisation, un compresseur par exemple, qui comprennent des moyens de tout type connu de réglage du débit de ce flux gazeux. Les moyens de réglage du débit de gaz de pulvérisation peuvent être combinés avec ceux du gaz de pré-pulvérisation, en particulier lorsque ces deux gaz sont identiques et sont issus d'une même source. Par ailleurs, ces moyens de réglage du débit sont adaptés en fonction de la section du conduit 38 de sortie pour obtenir un flux gazeux de pulvérisation ayant une vitesse d'éjection comprise entre 5 m/s et 120 m/s environ.

En fonctionnement, les moyens d'établissement des flux gazeux de prépulvérisation et de pulvérisation sont réglés de manière à ce que le rapport du débit du flux gazeux de prépulvérisation au débit du flux gazeux de pulvérisation soit dans une plage de 1 à 5 environ.

Le combustible liquide circulant dans l'espace compris entre le tube 10 et la buse 12 est prépulvérisé à l'intérieur de la chambre 30, sous l'effet du flux gazeux de prépulvérisation éjecté en sortie de la buse 12. Afin d'obtenir une prépulvérisation satisfaisante, le diamètre D2 du tronçon 18 est dimensionné afin que la pression à l'intérieur de la chambre de confinement 30 soit supérieure de 1 à 5 bars à la pression régnant dans l'espace de travail 21.

Sous l'effet de la pression régnant à l'intérieur de la chambre 30 et de la vitesse du flux gazeux de pré-pulvérisation, le mélange ainsi prépulvérisé est éjecté à la sortie d'extrémité 20 directement à l'intérieur de l'espace de travail 21 suivant un jet central 42 schématisé en pointillés.

Le flux gazeux de pulvérisation, éjecté en sortie 36 du tube extérieur 34 directement dans l'espace de travail 21, forme un jet 44 sensiblement annulaire schématisé en traits pointillés. Il rencontre le mélange prépulvérisé issu de la sortie 20 à l'extérieur du dispositif de pulvérisation dans l'espace de travail 21, et complète la pulvérisation de celui-ci. En particulier, le flux gazeux externe de pulvérisation assure un complément d'atomisation, qui déplace la répartition granulométrique du mélange prépulvérisé vers les diamètres de gouttelettes plus petits.

Dans un tel dispositif de pulvérisation, le combustible liquide est pulvérisé une première fois à l'intérieur de la chambre de confinement 30 formant l'espace de prépulvérisation, et le mélange ainsi prépulvérisé subit une pulvérisation externe ultérieure à l'intérieur de l'espace de travail 21 dans lequel s'établit la flamme.

Les moyens de réglage du débit des flux gazeux de prépulvérisation et de pulvérisation permettent de déterminer les caractéristiques de la flamme obtenue en sortie du dispositif de pulvérisation.

De plus, le flux gazeux de pulvérisation, éjecté en sortie 36 autour du mélange prépulvérisé, assure la protection de l'extrémité du tronçon 18 contre les attaques thermiques dues notamment aux transferts par radiations. Ainsi, tout risque de cokéfaction sur l'extrémité 38 est écarté, puisque le flux gazeux de pulvérisation assure un refroidissement permanent et forme en aval de cette extrémité une couche protectrice.

En outre, la veine gazeuse 44 de pulvérisation, qui entoure le mélange prépulvérisé 42 en sortie du dispositif de pulvérisation, protège le mélange prépulvérisé à l'intérieur de la chambre 30 de tout contact avec l'oxygène introduit séparément dans le four. Les risques de mise à feu du mélange prépulvérisé dans la chambre 30 sont ainsi largement réduits.

Par ailleurs, le diamètre réduit D4 de l'extrémité 28 de la buse d'éjection du gaz de prépulvérisation crée une perte de charge permettant de s'opposer au remplissage en retour de la buse 12 par du combustible liquide en cas d'arrêt de l'alimentation du gaz de prépulvérisation.

Afin d'assurer une bonne homogénéité spatiale du mélange prépulvérisé à la sortie 20 dans l'espace de travail, le tronçon 18 est choisi d'une longueur L1 suffisante et notamment supérieure à 10 mm.

En variante, d'autres moyens peuvent être utilisés en complément du flux gazeux de prépulvérisation issu de la buse 12 pour mettre en oeuvre la prépulvérisation à l'intérieur de l'espace de prépulvérisation délimité par la chambre 30. Par exemple, il peut être utilisé une coupelle rotative hâchant le combustible liquide, ou encore des moyens de compression du combustible liquide afin de lui conférer une grande énergie cinétique en entrant dans la chambre 30.

Avec un dispositif de pulvérisation tel que décrit ici, il a été obtenu en sortie, pour un débit de fuel liquide injecté compris entre 1/20 et 1/10 du débit du flux gazeux de prépulvérisation, des gouttes dont les diamètres s'échelonnent de 10 µm à 1000 µm et dont environ 50 % des gouttes ont un diamètre supérieur à 100 µm.

Les essais du dispositif de pulvérisation ont permis de constater l'importance de la vitesse d'éjection du fluide de pulvérisation dans l'espace de travail. Cette vitesse est, en fonctionnement normal, comprise entre 5 m/s et 120 m/s.

Plus cette vitesse est élevée, et plus les effets de protection résultant de la veine gazeuse externe 44 sont importants. Cependant, les vitesses élevées nuisent à l'accrochage de la flamme. Il est alors possible d'améliorer celui-ci en augmentant la surface offerte en section par le tronçon d'extrémité 34 en contact avec l'espace de travail, en augmentant l'épaisseur du tube par exemple ou en munissant celui-ci d'un rebord rentrant d'extrémité. Ceci permet de créer une recirculation de comburant et de gaz chauds devant l'extrémité du tronçon 34 et ainsi de favoriser l'accrochage de la flamme.

On notera que les vitesses élevées d'éjection du flux gazeux de pulvérisation favorisent la protection du dispositif contre les entrées de flamme mais conduisent à une élévation de la température du tronçon 34 d'extrémité, alors que les vitesses faibles limitent les effets de protection mais réduisent la température du tronçon 34.

Le dispositif de pulvérisation décrit ici permet la pulvérisation de tout combustible liquide possédant une viscosité inférieure à 100 cSt.

Par ailleurs, il est utilisable dans tout brûleur, notamment un brûleur de four de fusion de verre, pour produire une flamme accrochée, longue et molle. Le comburant peut avoir une teneur en oxygène comprise entre 20 % et 100%. Ce dispositif autorise une variation de la longueur de flamme et du volume de flamme dans un rapport de 1 à 4 en ajustant les différents débits. De plus, sa plage d'utilisation varie de 30 % à 150 % du débit nominal en combustible liquide.

## Revendications

1. Dispositif de pulvérisation d'un produit liquide, notamment d'un combustible liquide, dans un espace de travail (21) extérieur audit dispositif, comportant des moyens de pré-pulvérisation (10, 12, 20, 30) du produit liquide, lesdits moyens de pré-pulvérisation comprenant une chambre de confinement pourvue d'une sortie (20) d'éjection du mélange pré-pulvérisé débouchant directement dans l'espace de travail (21), des moyens d'alimentation (10, 19) desdits moyens de pré-pulvérisation en produit liquide à pulvériser et des moyens de pulvérisation du mélange pré-pulvérisé, lesdits moyens de pulvérisation comprenant des moyens (14, 36) d'éjection d'un flux gazeux de pulvérisation dans le mélange pré-pulvérisé à l'intérieur de l'espace de travail (21), en sortie des moyens de pré-pulvérisation (10, 12, 20, 30), **caractérisé en ce que** les moyens de pré-pulvérisation et les moyens d'éjection du flux gazeux de pulvérisation présentent respectivement un tronçon cylindrique d'extrémité (18, 34) dont les extrémités de sorties (20, 36) débouchent dans l'espace de travail (21) et sont disposées sensiblement dans un même plan sensiblement perpendiculaire à la direction (X-X) d'écoulement du flux du mélange pulvérisé, le diamètre D2 du tronçon d'extrémité (18) desdits moyens de pré-pulvérisation étant dimensionné afin que la pression à l'intérieur de la chambre de confinement (30) soit supérieure de 1 à 5 bars à la pression régnant dans l'espace de travail (21).

2. Dispositif de pulvérisation selon la revendication 1, **caractérisé en ce que** les moyens de pré-pulvérisation comportent une buse (12) d'éjection d'un flux gazeux de pré-pulvérisation et des moyens (31) d'établissement dudit flux gazeux de pré-pulvérisation.

3. Dispositif de pulvérisation selon la revendication 2, **caractérisé en ce que** les moyens d'alimentation en produit liquide comportent un tube (10) débouchant, à l'intérieur duquel est disposée ladite buse (12) d'éjection du flux gazeux de pré-pulvérisation, laquelle buse (12) a son extrémité (28) d'éjection disposée en retrait de l'extrémité (20) du tube (10) qui forme la sortie (20) d'éjection des moyens de pré-pulvérisation.

4. Dispositif de pulvérisation selon la revendication 3, **caractérisé en ce que** le tube (10) d'alimentation en produit liquide est de diamètre décroissant vers ladite sortie d'éjection (20) délimitant ainsi la chambre de confinement (30) dans laquelle est réalisée la pré-pulvérisation.

5. Dispositif de pulvérisation selon l'une quelconque des revendications 1 à 4, **caractérisé en ce que** le diamètre de sortie (28) de ladite buse (12) est compris entre le quart et le quadruple du diamètre de sortie (20) desdits moyens de pré-pulvérisation.

6. Dispositif de pulvérisation selon l'une quelconque des revendications 2 à 5, **caractérisé en ce que** ladite buse (12) comporte une extrémité (28) de sortie de diamètre réduit s'opposant au remplissage en retour de celle-ci, en cas d'interruption de l'alimentation en fluide de pré-pulvérisation.

7. Dispositif de pulvérisation selon l'une quelconque des revendication 1 à 6, **caractérisé en ce qu'**il comporte des moyens de réglage des débits des flux gazeux de pré-pulvérisation et de pulvérisation.

8. Système de combustion pour un four **caractérisé en ce qu'**il comporte un dispositif selon l'une des revendications 1 à 7 dans lequel le combustible pulvérisé est enflammé dans l'espace de travail (21).

## Patentansprüche

1. Vorrichtung zur Zerstäubung eines flüssigen Produkts, insbesondere eines flüssigen Brennstoffs, in einen Arbeitsraum (21) außerhalb der besagten Vorrichtung, umfassend Mittel zur Vorzerstäubung (10, 12, 20, 30) des flüssigen Produkts, wobei die besagten Mittel zur Vorzerstäubung eine einschließende Kammer enthalten, die mit einem Ausgang (20) zum Ausstoß der vorzerstäubten Mischung ausgestattet ist, der direkt in den Arbeitsraum (21) mündet, Mittel zur Zuführung (10, 19) des flüssigen, zu zerstäubenden Produkts zu den besagten Mitteln zur Vorzerstäubung und Mittel zur Zerstäubung der vorzerstäubten Mischung am Ausgang der Mittel zur Vorzerstäubung (10, 12, 20, 30), wobei die besagten Mittel zur Zerstäubung Mittel (14, 36) zum Ausstoß eines gasförmigen Flusses zur Zerstäubung in die vorzerstäubte Mischung im Inneren des Arbeitsraums (21) enthalten,
**dadurch gekennzeichnet, dass** die Mittel zur Vorzerstäubung und die Mittel zum Ausstoß des gasförmigen Flusses zur Zerstäubung jeweils ein zylinderförmiges Endstück (18, 34) aufweisen, dessen Ausgangsenden (20, 36) in den Arbeitsraum (21) münden und genau in derselben Ebene angeordnet sind, die genau senkrecht zu der Strömungsrichtung (X-X) des Flusses der zerstäubten Mischung ist und der Durchmesser D2 des Endstücks (18) der besagten Mittel zur Vorzerstäubung so ausgelegt ist, dass der Druck im Inneren der einschließenden Kammer (30) um 1 bis 5 bar höher ist als der Druck, der in dem Arbeitsraum (21) herrscht.

2. Vorrichtung zur Zerstäubung nach Anspruch 1,
**dadurch gekennzeichnet, dass** die Mittel zur Vorzerstäubung eine Düse (12) zum Ausstoß eines gasförmigen Flusses zur Vorzerstäubung und Mittel (31) zur Einführung des besagten gasförmigen Flusses zur Vorzerstäubung umfassen.

3. Vorrichtung zur Zerstäubung nach Anspruch 2,
**dadurch gekennzeichnet, dass** die Mittel zur Zuführung des flüssigen Produkts ein sich öffnendes Rohr (10) umfassen, in dessen Innerem die besagte Düse (12) zum Ausstoß des gasförmigen Flusses zur Vorzerstäubung angeordnet ist, wobei die besagte Düse (12) mit ihrem ausstoßenden Ende (28) nach hinten gegenüber dem Endstück (20) des Rohrs (10) versetzt ist, das den ausstoßenden Ausgang (20) der Mittel zur Vorzerstäubung bildet.

4. Vorrichtung zur Zerstäubung nach Anspruch 3,
**dadurch gekennzeichnet, dass** das Rohr (10) für die Zuführung des flüssigen Produkts einen kleiner werdenden Durchmesser zu dem besagten ausstoßenden Ausgang (20) hat, so dass damit die einschließende Kammer (30), in der die Vorzerstäubung stattfindet, begrenzt wird.

5. Vorrichtung zur Zerstäubung nach einem der Ansprüche 1 bis 4, **dadurch gekennzeichnet, dass** der Durchmesser des Ausgangs (28) der besagten Düse (12) zwischen einem Viertel und dem Vierfachen des Durchmessers des Ausgangs (20) der besagten Mittel zur Vorzerstäubung liegt.

6. Vorrichtung zur Zerstäubung nach einem der Ansprüche 2 bis 5, **dadurch gekennzeichnet, dass** die besagte Düse (12) ein Ausgangsende (28) mit einem reduzierten Durchmesser hat, das ihrer Füllung in rückwärtiger Richtung im Falle einer Unterbrechung der Zuführung des Fluids zur Vorzerstäubung entgegenwirkt.

7. Vorrichtung zur Zerstäubung nach einem der Ansprüche 1 bis 6, **dadurch gekennzeichnet, dass** sie Mittel zur Regelung des Durchsatzes der gasförmigen Flüsse zur Vorzerstäubung und zur Zerstäubung umfasst.

8. Verbrennungssystem für einen Ofen, **dadurch gekennzeichnet, dass** es eine Vorrichtung nach einem der Ansprüche 1 bis 7 umfasst, in dem der zerstäubte Brennstoff in dem Arbeitsraum (21) entzündet wird.

## Claims

1. Device for spraying a liquid product, especially a liquid fuel, into a working space (21) external to the said device, comprising means (10, 12, 20, 30) for prespraying the liquid product, the said prespraying means comprising a confinement chamber provided with an outlet (20) for ejecting the presprayed mixture opening directly into the working space (21), means (10, 19) for feeding the said prespraying means with the liquid product to be sprayed and means for spraying the presprayed mixture, the said spraying means comprising means (14, 36) for ejecting a gaseous spraying stream into the presprayed mixture inside the working space (21) at the outlet of the prespraying means (10, 12, 20, 30), **characterized in that** the prespraying means and the means for ejecting the gaseous spraying stream have, respectively, a cylindrical end portion (18, 34), the outlet ends (20, 36) of which open into the working space (21), and lie substantially in the same plane substantially perpendicular to the direction (X-X) of flow of the stream of sprayed mixture, the diameter D2 of the end portion (18) of the said prespraying means having a value so that the pressure inside the confinement chamber (30) is from 1 to 5 bar greater than the pressure obtaining in the working space (21).

2. Spraying device according to Claim 1, **characterized in that** the prespraying means comprise a nozzle (12) for ejecting a gaseous prespraying stream and means (31) for establishing the said gaseous prespraying stream.

3. Spraying device according to Claim 2, **characterized in that** the means for feeding the liquid product comprise an emerging pipe (10) inside which the said nozzle (12) for ejecting the gaseous prespraying stream is placed, which nozzle (12) has its ejection end (28) set back from that end (20) of the pipe (10) which forms the ejection outlet (20) of the prespraying means.

4. Spraying device according to Claim 3, **characterized in that** the pipe (10) for feeding the liquid product has a diameter which decreases towards the said ejection outlet (20), thus defining the confinement chamber (30) in which the prespraying is carried out.

5. Spraying device according to any one of Claims 1 to 4, **characterized in that** the outlet diameter (28) of the said nozzle (12) is between one quarter and four times the outlet diameter (20) of the said prespraying means.

6. Spraying device according to any one of Claims 2 to 5, **characterized in that** the said nozzle (12) has an outlet end (28) of reduced diameter preventing any back-filling of the said nozzle should the prespraying fluid feed be interrupted.

7. Spraying device according to any one of Claims 1 to 6, **characterized in that** it includes means for adjusting the flow rates of the gaseous prespraying and spraying streams.

8. Combustion system for a furnace, **characterized in that** it includes a device according to one of Claims 1 to 7 in which the sprayed fuel is ignited in the working space (21).
